(19) Europäisches Patentamt / European Patent Office / Office européen des brevets

(11) **EP 3 744 448 B1**

(12) **EUROPÄISCHE PATENTSCHRIFT**

(45) Veröffentlichungstag und Bekanntmachung des Hinweises auf die Patenterteilung:
**29.04.2026 Patentblatt 2026/18**

(21) Anmeldenummer: **20172657.7**

(22) Anmeldetag: **04.05.2020**

(51) Internationale Patentklassifikation (IPC):
**B23B 5/16** (2006.01)   **B21C 37/30** (2006.01)
**B21D 41/02** (2006.01)   **B24B 9/00** (2006.01)
**B24B 9/04** (2006.01)   **B24B 9/20** (2006.01)
**B26D 3/16** (2006.01)

(52) Gemeinsame Patentklassifikation (CPC):
**B23B 5/168; B21C 37/30; B24B 9/007; B24B 9/04; B24B 9/20; B26D 3/166; B26D 3/169;**
B21D 41/021; B23B 2210/02; B23B 2226/61; B23B 2270/26

(54) **KALIBRIER- UND ANFASWERKZEUG**

CALIBRATING AND CHAMFERING TOOL

OUTIL DE CALIBRAGE ET DE CHANFREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.05.2019 DE 102019114083**

(43) Veröffentlichungstag der Anmeldung:
**02.12.2020 Patentblatt 2020/49**

(73) Patentinhaber: **ProPress GmbH**
**42781 Haan (DE)**

(72) Erfinder: **Felsberg, Martin**
**42699 Solingen (DE)**

(74) Vertreter: **RGTH**
**Patentanwälte PartGmbB**
**Neuer Wall 10**
**20354 Hamburg (DE)**

(56) Entgegenhaltungen:
DE-A1- 102005 017 875    DE-U1- 202008 014 245
FR-A- 1 291 624    GB-A- 2 245 516
US-A- 5 853 272

**Beschreibung**

Die vorliegende Erfindung betrifft ein Kalibrier- und Anfaswerkzeug zum passgerechten Herrichten von Rohrenden von Rohren, die ein Außenrohr aus Kunststoff und ein Innenrohr aus Metall aufweisen, mit einer Kalibrierhülse, die zur zentrierenden Aufnahme des Rohrendes ausgebildet ist, und einem Schneidenträger, der eine Grundplatte, einen Dorn sowie Schneiden zum Anfasen des Außenrohrs aufweist.

Nach dem Stand der Technik sind Kalibrier- und Anfaswerkzeuge bekannt, die zum passgerechten Herrichten von sogenannten Verbundrohren ausgebildet sind, die Außen- und Innenrohre aus Kunststoff sowie einen dazwischen angeordneten Metallkern aufweisen. Solche Werkzeuge, wie sie beispielsweise in

DE 297 09 178 U1 beschrieben sind, weisen einen Kalibrierdorn auf, der zur Kalibrierung des Rohrendes weit in das Innenrohr eingeführt wird und an diesem anliegt. Ferner sind Schneiden vorgesehen, die die Innenkanten des Rohrendes zerspanend bearbeiten und dabei anfasen. Die hierdurch entstehende Fase dient als Einführhilfe von Verbindungselementen (Fittinge), über die mehrere Rohre miteinander verbunden werden können.

Vergleichbare Werkzeuge sind insbesondere aus DE 20 2008 014 245 U1 und DE A1 bekannt Die bekannten Kalibier- und Anfaswerkzeuge sind jedoch zum passgerechten Herrichten von Rohren ungeeignet, die lediglich ein Kunststoffaußenrohr und ein Metallinnenrohr aufweisen, weil die großflächige Anlage des Kalibrierdorns am metallischen Innenrohr zu unerwünschten Beschädigungen am Innenrohr führt. Auch das Anfasen des Metallinnenrohrs ist mit herkömmlichen Schneiden nicht in der wünschenswerten Qualität möglich, weil es insbesondere am Außenrand des metallischen Innenrohrs zu unerwünschten Rissbildungen kommt.

Um dennoch derartige Rohre mit einem Kunststoffaußenrohr und einem Metallinnenrohr verlegen zu können, wurden Fittinge hergestellt, die im Vergleich zu herkömmlichen Fittingen durch Auftulpen einen stark ausgeprägten Aufnahmeabschnitt mit einer großen Aufweitung aufweisen. Insbesondere durch die überdimensionierte Aufweitung der Aufnahmen der Fittinge sind die Herstellkosten derselben vergleichsweise hoch.

Hiervon ausgehend ist es die Aufgabe der vorliegenden Erfindung, ein Kalibrier- und Anfaswerkzeug vorzuschlagen, das die nach dem Stand der Technik bekannten Nachteile behebt und die Verbindung von Fittingen mit Rohren vereinfacht, die ein Kunststoffaußenrohr und ein Metallinnenrohr besitzen.

Diese Aufgabe wird durch das Kalibrier- und Anfaswerkzeug nach Anspruch 1 gelöst. Erfindungsgemäß besitzt das Kalibrier- und Anfaswerkzeug mindestens ein Formelement zum Aufweiten des Innenrohrs. Ferner ist vorgesehen, dass das mindestens eine Formelement eine Erhebung ist, die auf der Grundplatte und/oder an dem Dorn des Schneidenträgers ausgebildet ist. In diesem Sinn ist das mindestens eine Formelement bzw. die mindestens eine Erhebung ein Teil des Dorns. Schließlich ist vorgesehen, dass das mindestens eine Formelement die Grundplatte um ein Maß B überragt, das kleiner oder gleich dem Maß A ist, mit dem die Schneiden die Grundplatte in längsaxialer Richtung überragen.

Mit anderen Worten ist erfindungsgemäß vorgesehen, dass das Kalibrier- und Anfaswerkzeug zur zentrierenden Aufnahme eines Rohrendes ausschließlich eine Kalibrierhülse aufweist, die zur Anlage des Außenrohrs ausgebildet ist. Zum Anfasen sind Schneiden auf einem Schneidenträger ausgebildet, die ausschließlich das Außenrohr anfasen. Das Innenrohr wird demgegenüber nicht zerspanend bearbeitet, sondern ausschließlich in einem kurzen Abschnitt mittels des Formelementes aufgeweitet und hierdurch verformt. Demgemäß wird an das Innenrohr im Gegensatz zum Stand der Technik eine vergleichsweise kurze Fase angedrückt.

Im Gegensatz zum Stand der Technik wird die zentrierende und mithin kalibrierende Anlage zwischen Rohr und Werkzeug ausschließlich durch eine Kalibrierhülse durchgeführt, die das Rohr umgreift bzw. umfasst. Außerhalb des mindestens einen Formelementes ergibt sich im Übrigen keine Anlage des Kalibrier- und Anfaswerkzeugs am Innenrohr. Hierdurch können Beschädigungen des Metallinnenrohrs wirksam vermieden werden. Ferner sind die Schneiden des Schneidenträgers im Gegensatz zum Stand der Technik derart angeordnet, dass sie ausschließlich mit dem Außenrohr in Eingriff sind, so dass zerspanend nur eine Fase am Außenrohr und nicht am Innenrohr ausgebildet wird. Auch hierdurch können Rissbildungen am Metallinnenrohr oder sonstige Beschädigungen wirksam vermieden werden, das lediglich durch das mindestens eine Formelement aufgeweitet wird, das nur in einem vergleichsweise kurzen Abschnitt mit der Innenseite des Innenrohrs in Eingriff ist.

Bevorzugte Ausführungsformen der vorliegenden Erfindung werden in den Unteransprüchen sowie nachfolgend beschrieben.

Zum Aufweiten des Innenrohres weist das mindestens eine Formelement vorzugsweise eine Funktionsfläche auf, die dazu eingerichtet ist, um beim Kalibrieren und Anfasen eines Rohrendes in Anlage mit dem Innenrohr zu sein, und winklig zur Längsachse L des Kalibrier- und Anfaswerkzeugs ausgerichtet ist, so dass das Innenrohr zunehmend aufgeweitet wird, je weiter das Formelement in Eingriff mit dem Innenrohr ist. Vorzugsweise ist das Formelement als teilkugelförmige Erhebung ausgebildet, so dass sich eine teilkugelförmige Funktionsfläche ergibt.

Außerhalb des mindestens einen zur Verformung des Innenrohrs ausgebildeten Formelementes ist das Kalibrier- und Anfaswerkzeug vorzugsweise frei von einer Anlagefläche am Innenrohr.

Es wurde bereits darauf hingewiesen, dass eine Anlage am Innenrohr ausschließlich innerhalb eines vergleichsweise kurzen Abschnitts erfolgt, um das Innenrohr dort aufzuweiten. Insbesondere ist vorgesehen, dass das Maß B halb so lang ist, wie das Maß A. Anders ausgedrückt gilt:

$$\text{Maß B} \leq \text{Maß A, insbesondere Maß B} \leq 0{,}5 \cdot \text{Maß A}$$

Hierdurch wird eine großflächige Anlage des mindestens einen Formelementes am Innenrohr wirksam vermieden und die Anlage beschränkt sich auf einen kurzen Abschnitt am Rohrende, um die dort vorhandene Schnittfläche des Innenrohrs um ein geringfügiges Maß aufzuweiten. Im Rahmen eines konkreten Ausführungsbeispiels gelten folgende Maße:

$$\text{Maß A} \leq 10 \text{ mm und Maß B} \leq 10 \text{ mm, vorzugsweise Maß B} \leq 5 \text{ mm}$$

Nach einer weiteren vorteilhaften Ausgestaltung der Erfindung ist vorgesehen, dass die Schneiden des Schneidenträgers auf Schneidenkörpern ausgebildet sind. Die Schneidenkörper sind im wesentlichen quaderförmige Blöcke und überragen eine rückwärtige Grundplatte des Schneidenträgers. Vorzugsweise sind an einer Grundplatte drei äquidistant angeordnete Schneidenkörper mit daran ausgebildeten Schneiden vorgesehen.

Das erfindungsgemäße Kalibrier- und Anfaswerkzeug ist vorzugsweise mehrstückig ausgebildet und besitzt neben dem Schneidenträger und der Kalibrierhülse ein Betätigungselement, insbesondere einen Knauf, der mit dem Schneidenträger und der Kalibrierhülse verbunden werden kann. Im zusammengesetzten Zustand des Kalibrier- und Anfaswerkzeugs ruht der Schneidenträger dabei innerhalb der Kalibrierhülse, wobei die Schneidenkörper in Längsnuten eingreifen, die in die Wandung der Kalibrierhülse eingebracht sind. Vorzugsweise durchgreifen die Längsnuten dabei die Wandung der Kalibrierhülse vollständig. Ferner ist vorzugsweise vorgesehen, dass die Schneidenkörper jeweils in Anlage mit einer Nutaußenseite der Längsnuten sind und von der anderen Nutaußenseite soweit beabstandet sind, dass eine Spanabfuhr ausgebildet ist. Hierdurch wird vermieden, dass beim Anfasen gebildete Späne das Kalibrier- und Anfaswerkzeug zusetzen, was eine längere Bearbeitungszeit ermöglicht, ohne das Werkzeug reinigen zu müssen.

Es wurde bereits erläutert, dass das erfindungsgemäße Kalibrier- und Anfaswerkzeug vorzugsweise dreistückig ausgebildet ist und neben einem Schneidenträger und einer Kalibrierhülse eine Betätigungseinrichtung in Form eines Knaufs aufweist. Nach einer diesbezüglich bevorzugten Ausgestaltung der Erfindung ist vorgesehen, dass die Grundplatte und/oder der anlageflächenfreie Dorn eine innere Bohrung mit einem Innengewinde zur Verbindung mit der Betätigungseinrichtung aufweist. Die Kalibrierhülse besitzt dabei eine gewindefreie Bohrung, die ebenfalls zur Verbindung mit der Betätigungseinrichtung ausgebildet ist. Das Werkzeug kann bei diesem Aufbau derart zusammengesetzt werden, dass die Kalibrierhülse auf einen Verbindungsbolzen der Betätigungseinrichtung gesteckt wird und dass der Schneidenträger anschließend über sein Innengewinde auf ein Außengewinde des Verbindungsbolzens aufgeschraubt wird, so dass die Kalibrierhülse nach dem vollständigen Aufschrauben des Schneidenträgers formschlüssig zwischen Schneidenträger und Betätigungseinrichtung gelagert ist.

Zu Gunsten einer zentrierten Lagerung des Schneidenträgers innerhalb der Kalibrierhülse ist vorgesehen, dass der Schneidenträger an seiner Unterseite eine erhabene Anlagefläche aufweist, die von einer konischen Mantelfläche begrenzt ist. Die der Anlagefläche des Schneidenträgers gegenüberliegende Anlagefläche der Kalibrierhülse ist korrespondierend ausgebildet und besitzt ebenfalls einen konischen Abschnitt, der die Anlagefläche flankiert und eine Zentrierung des Schneidkörpers innerhalb der Kalibrierhülse erlaubt.

Weitere bevorzugte Ausführungsformen sowie konkrete Ausgestaltungen der vorliegenden Erfindung werden nachfolgend mit Bezug auf die Figuren erläutert. Es zeigen:

Fig. 1       eine Explosionsdarstellung eines Kalibrier- und Anfaswerkzeugs,

Fig. 2       eine Querschnittsdarstellung eines Kalibrier- und Anfaswerkzeugs,

Fig. 3       eine Draufsicht eines Kalibrier- und Anfaswerkzeugs,

Fig. 4       eine Seitenansicht der Kalibrierhülse mit eingelegtem Schneidenträger und

Fig. 5 a-c    Verfahrensschritte beim Kalibrieren und Anfasen eines Rohrendes.

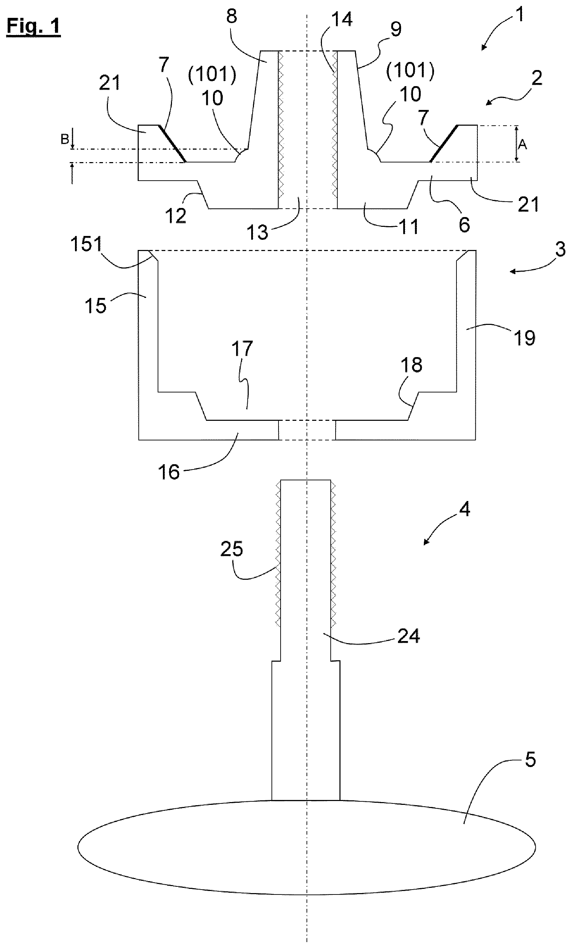

Fig. 1 zeigt eine dreistückige Ausgestaltung eines Kalibrier- und Anfaswerkzeugs 1 mit einem Schneidenträger 2, einer Kalibrierhülse 3 und einer Betätigungseinrichtung 4 in Form eines Knaufs 5. Der Schneidenträger 2 besitzt eine Grundplatte 6, an deren Peripherie Schneidenkörper 21 angeordnet sind, die die Oberfläche der Grundplatte 6 um ein Maß A in längsaxialer Richtung überragen und an deren Innenseiten schräg angeordnete Schneiden 7 zum Anfasen eines Rohrendes ausgebildet sind. Darüber hinaus ist auf der Grundplatte 6 ein Dorn 8 mit einer konischen Mantelfläche 9 ausgebildet, der am Übergang zur Grundplatte 6 Formelemente 10 in Form von teilkugelförmigen Erhebungen 101 zum Aufweiten des Innenrohrs aufweist. Die Formelemente 10 überragen die Oberfläche der Grundplatte 6 um ein Maß B, das kleiner ist als das Maß A mit dem die Schneidenträger 2 bzw. die Schneidenkörper 21 und/oder die Schneiden 7 die Grundplatte 6 überragen. Im dargestellten Ausführungsbeispiel ist das Maß B ca. halb so groß wie das Maß A. An der Unterseite besitzt die Grundplatte 6 eine erhabene Anlage 11, die von einem konischen Außenmantel 12 flankiert ist. Der Dorn 8 besitzt eine längsaxial ausgerichtete Bohrung 13 mit einem Innengewinde 14, das zur Befestigung der Betätigungseinrichtung 4 dient.

Die Kalibrierhülse 3 besitzt einen Zylinderabschnitt 15, der zur kalibrierenden Anlage des Rohrs ausgebildet ist, so dass das Rohr zentriert bis hin zu den Schneiden 7 eingeführt wird. Um das Einführen eines ggf. leicht verformten Rohres zu erleichtern, kann die Kalibrierhülse 3 eine konisch ausgebildete Führungsfläche 151 aufweisen. Die Kalibrierhülse 3 besitzt eine Basisplatte 16, die mit einer Vertiefung 17 zur Anlage der Grundplatte 6 des Schneidenträgers 2 ausgestaltet ist. Die Vertiefung 17 ist von einer konischen Mantelfläche 18 flankiert, so dass sich eine zentrierte Anlage zwischen Schneidenträger 2 und Kalibrierhülse 3 ergibt. Innerhalb der Vertiefung 17 ist in der Basisplatte eine gewindefreie Bohrung 34 zur Aufnahme der Betätigungseinrichtung ausgebildet. Die Wandung 19 der Kalibrierhülse 3 besitzt Längsnuten (in Fig. 1 nicht dargestellt), in denen im zusammengesetzten Zustand des Werkzeugs die Schneidenkörper 21 mit den hieran ausgebildeten Schneiden 7 ruhen. Dabei liegen sie in radialer Richtung an jeweils einer Nutwand an und sind von der gegenüberliegenden Nutwand beabstandet, so dass sich durch den freien Zwischenraum eine Spanabfuhr für Späne ergibt, die beim Anfasen anfallen.

Die als Knauf 5 ausgebildete Betätigungseinrichtung 4 besitzt einen Bolzen 24 mit einem Außengewinde 25, das eine lösbare Verbindung zum Schneidenträger 2 erlaubt.

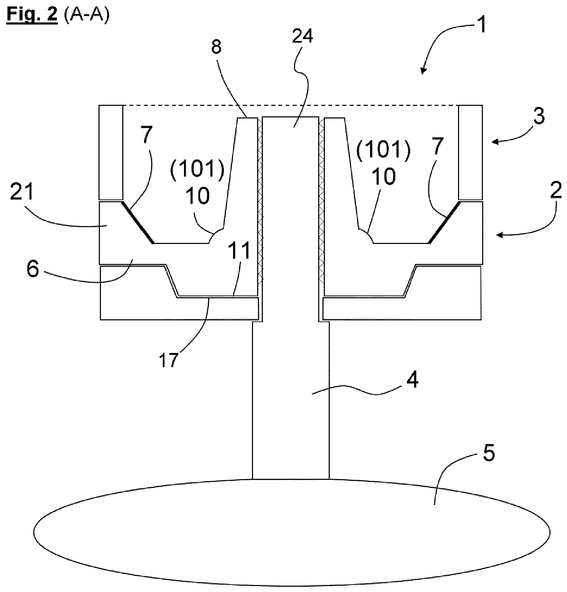

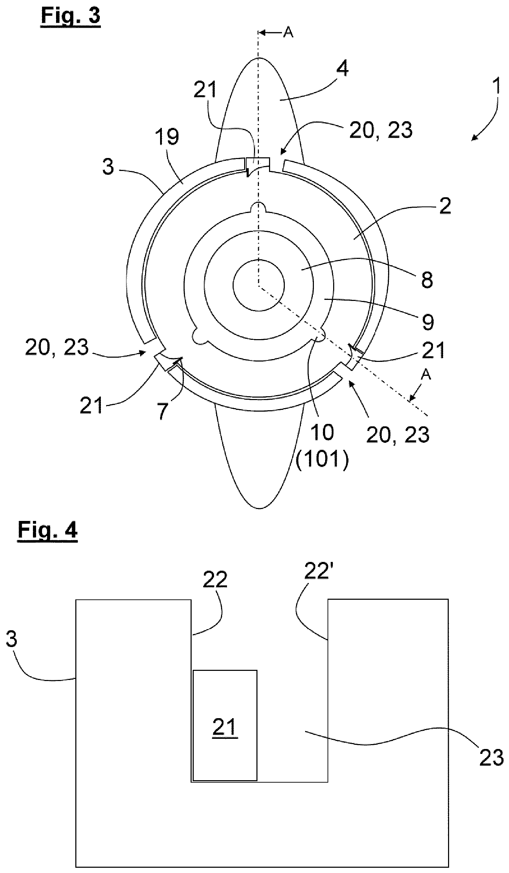

Fig. 2 zeigt das Kalibrier- und Anfaswerkzeug 1 im zusammengesetzten Zustand und entlang der Querschnittsfläche A-A (Fig. 3). Die Kalibrierhülse 3 ist hiernach formschlüssig zwischen dem Schneidenträger 2 und der Betätigungseinrichtung 4 gelagert.

Fig. 3 zeigt eine Draufsicht auf das zusammengesetzte Kalibrier- und Anfaswerkzeug 1 mit dem Schneidenträger 2, dem Dorn 8 mit einer konischen Mantelfläche 9 und den Formelementen 10 in Form der Erhebungen 101 zum Aufweiten des Innenrohrs, der Kalibrierhülse 3 und der Betätigungseinrichtung 4. Deutlich erkennbar sind die Längsnuten 20, die innerhalb der Wandung 19 der Kalibrierhülse 3 eingebracht sind, in die die Schneidenkörper 21 mit den darauf ausgebildeten Schneiden 7 ruhen, wobei sie jeweils nur an einer Nutwand 22 der Längsnuten 20 anliegen. Die Beabstandung zur gegenüberliegenden Nutwand 22' ist - wie bereits beschrieben - als Spanabfuhr 23 ausgebildet (Fig. 4).

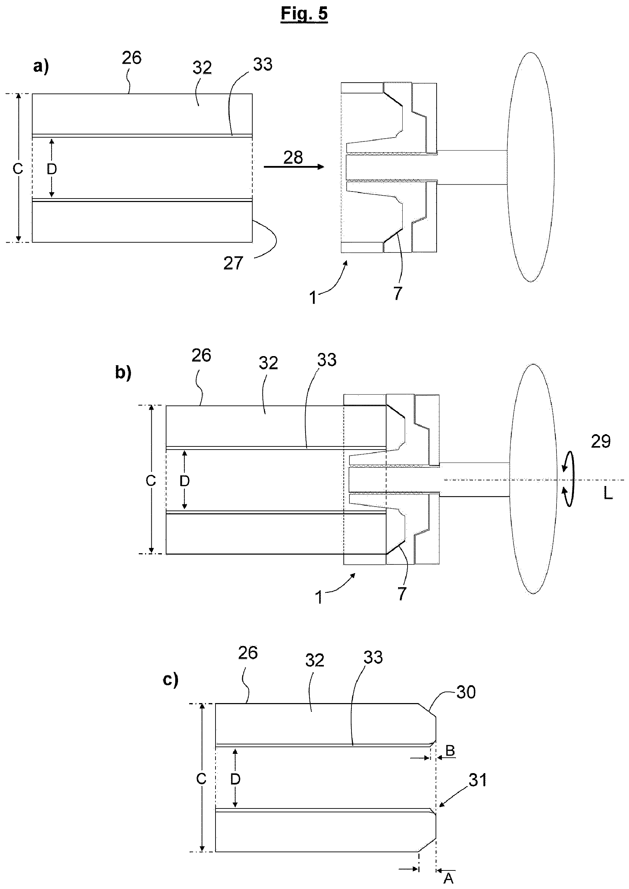

Die Fig. 5a-c zeigen in vereinfachter Darstellung die Verfahrensschritte zum Anfasen eines Rohrendes 26 eines Rohres, das ein Außenrohr aus Kunststoff 32 und ein Innenrohr aus Metall 33 aufweist und das vor dem Anfasen eine ebene Stirnfläche 27 besitzt. In der Praxis werden Rohre mit unterschiedlichen Innendurchmessern D und Außendurchmessern C bearbeitet. Insbesondere sind Rohre mit folgenden Abmessungen bekannt:
C = 16 mm, D = 12 mm; C = 20 mm, D = 15,5 mm; C = 75 mm, D = 65 mm.

Zum Kalibrieren und Anfasen wird das Rohrende 26 in Pfeilrichtung 28 in das Kalibrier- und Anfaswerkzeug 1 so weit eingeführt, bis die Stirnfläche 27 mit den Schneiden 7 in Eingriff ist. Dabei liegt das Rohr bis zum Eingriff mit den Schneiden 7 ausschließlich an der Kalibrierhülse 3 an. Durch anschließendes Drehen des Kalibrier- und Anfaswerkzeugs in Pfeilrichtung 29 und um seine Längsachse L wird die Stirnfläche 27 des Rohrendes 26 angefast, zusammen mit dem Eingriff des Rohres mit den Schneiden 7 oder später gelangt das Rohr in Anlage mit den Erhebungen 101, die das Innenrohr 33 in einem kurzen Abschnitt verformen und dabei aufweiten. Nach dem erfolgten Kalibrieren und Anfasen (s. Fig. 5c)) besitzt das Rohrende 26 eine durch das Zerspanen eingebrachte Fase 30 an seiner Außenseite und eine vergleichsweise gleich lange oder kürzere angedrückte Aufweitung 31 (oder Fase) an der Innenseite. Ein derart kalibriertes und angefastes Rohrende 26 kann in einfacher Weise in ein herkömmliches Fitting eingeführt und hierin verpresst werden, so dass sich insgesamt eine deutliche Vereinfachung bei der Verbindung von Rohren und Fittingen ergibt, insbesondere, weil auf das aufwendige Auftulpen von Fittingen verzichtet werden kann.

**Bezugszeichenliste**

| | |
|---|---|
| 1 | Kalibrier- und Anfaswerkzeug |
| 2 | Schneidenträger |
| 3 | Kalibrierhülse |
| 4 | Betätigungsrichtung |
| 5 | Knauf |
| 6 | Grundplatte |
| 7 | Schneiden |
| 8 | Dorn |
| 9 | Mantelfläche |
| 10 | Formelement |
| 101 | Erhebung |

| 11 | Anlage |
|---|---|
| 12 | Außenmantel |
| 13 | Bohrung |
| 14 | Innengewinde |
| 15 | Zylinderabschnitt |
| 151 | Führungsfläche |
| 16 | Basisplatte |
| 17 | Vertiefung |
| 18 | Mantelfläche |
| 19 | Wandung |
| 20 | Längsnut |
| 21 | Schneidenkörper |
| 22, 22' | Nutwand |
| 23 | Spanabfuhr |
| 24 | Bolzen |
| 25 | Außengewinde |
| 26 | Rohrende |
| 27 | Stirnfläche |
| 28 | Pfeilrichtung |
| 29 | Pfeilrichtung |
| 30 | Fase |
| 31 | Aufweitung |
| 32 | Außenrohr aus Kunststoff |
| 33 | Innenrohr aus Metall |
| 34 | gewindefreie Bohrung |

| A | Maß (Höhe der Anfasschneide) |
|---|---|
| B | Maß (Höhe des Formelementes) |
| C | Durchmesser des Außenrohres |
| D | Durchmesser des Innenrohres |
| L | Längsachse |

**Patentansprüche**

1. Kalibrier- und Anfaswerkzeug zum passgerechten Herrichten von Rohrenden (26) von Rohren, die ein Außenrohr aus Kunststoff (32) und ein Innenrohr aus Metall (33) aufweisen, mit einer Kalibrierhülse (3), die zur zentrierenden Aufnahme des Rohrendes (26) ausgebildet ist, und einem Schneidenträger (2), der eine Grundplatte (6), einen Dorn (8) sowie Schneiden (7) zum Anfasen des Außenrohrs (32) aufweist, **gekennzeichnet durch** mindestens ein Formelement (10) zum Aufweiten des Innenrohrs (33), wobei das mindestens eine Formelement (10) eine Erhebung (101) ist, die auf der Grundplatte (6) und/oder an dem Dorn (8) des Schneidenträgers (2) ausgebildet ist und die Grundplatte (6) um ein Maß B überragt, das kleiner oder gleich einem Maß A ist, mit dem die Schneiden (7) die Grundplatte (6) in längsaxialer Richtung überragen.

2. Kalibrier- und Anfaswerkzeug nach Anspruche 1, **dadurch gekennzeichnet, dass** das mindestens eine Formelement (10) zum Aufweiten des Innenrohres (33) eine Funktionsfläche aufweist, die dazu eingerichtet ist, um beim Kalibrieren und Anfasen eines Rohrendes (26) in Anlage mit dem Innenrohr (33) zu sein, und winklig zur Längsachse L des Kalibrier- und Anfaswerkzeugs (1) ausgerichtet ist, so dass das Innenrohr (33) zunehmend aufgeweitet wird, je weiter das Formelement (10) in Eingriff mit dem Innenrohr (33) ist.

3. Kalibrier- und Anfaswerkzeug nach einem der Ansprüche 1 oder 2, **dadurch gekennzeichnet, dass** das Kalibrier- und Anfaswerkzeug (1) außerhalb des mindestens einen zur Verformung des Innenrohrs (33) ausgebildeten Formelementes (10) frei von einer Anlagefläche am Innenrohr (33) ist.

4. Kalibrier- und Anfaswerkzeug nach einem der Ansprüche 1 bis 3, **dadurch gekennzeichnet, dass** die Schneiden (7) des Schneidenträgers (2) auf Schneidenkörpern (21) ausgebildet sind.

5. Kalibrier- und Anfaswerkzeug nach Anspruch 4, **dadurch gekennzeichnet, dass** der Schneidenträger (2) im zusammengesetzten Zustand des Werkzeugs innerhalb der Kalibrierhülse (3) ruht, wobei die Schneidenkörper (21) in Längsnuten (20) eingreifen, die in der Wandung (19) der Kalibrierhülse (3) eingebracht sind.

6. Kalibrier- und Anfaswerkzeug nach Anspruch 5, **dadurch gekennzeichnet, dass** die Längsnuten (20) die Wandung (19) der Kalibrierhülse (3) vollständig durchgreifen.

7. Kalibrier- und Anfaswerkzeug nach einem der Ansprüche 5 oder 6, **dadurch gekennzeichnet, dass** die Schneidenkörper (21) jeweils in Anlage mit einer Nutaußenseite (22) der Längsnuten (20) sind und von der anderen Nutaußenseite (22') soweit beabstandet sind, dass eine Spanabfuhr (23) ausgebildet ist.

8. Kalibrier- und Anfaswerkzeug nach einem der Ansprüche 3 bis 7, **dadurch gekennzeichnet, dass** die Grundplatte (6) und/oder der anlageflächenfreie Dorn (8) eine innere Bohrung (13) mit einem Innengewinde (14) zur Aufnahme einer Betätigungseinrichtung (4) aufweist, die insbesondere als Knauf (5) ausgebildet ist.

9. Kalibrier- und Anfaswerkzeug nach Anspruch 8, **dadurch gekennzeichnet, dass** die Kalibrierhülse (3) eine gewindefreie Bohrung (34) zur Aufnahme der Betätigungseinrichtung (4) aufweist.


## Claims

1. Calibrating and chamfering tool for the precise preparation of pipe ends (26) of pipes which have a plastic outer pipe (32) and a metal inner pipe (33), with a calibrating sleeve (3) which is formed for a centering reception of the pipe end (26), and a cutting tool holder (2) which has a base plate (6), a mandrel (8), and cutting tools (7) for chamfering the outer pipe (32), **characterized by** at least one forming element (10) for expanding the inner pipe (33), wherein the at least one forming element (10) is a protrusion (101) which is formed on the base plate (6) and/or on the mandrel (8) of the cutting tool carrier (2) and protrudes beyond the base plate (6) by a distance B that is smaller than or equal to a distance A by which the cutting tools (7) protrude beyond the base plate (6) in the longitudinal axial direction.

2. Calibrating and chamfering tool according to claim 1, **characterized in that** the at least one forming element (10) for expanding the inner pipe (33) has a functional surface that is configured to be in contact with the inner pipe (33) during the calibrating and chamfering of a pipe end (26), and is aligned at an angle to the longitudinal axis L of the calibrating and chamfering tool (1), such that the inner pipe (33) is progressively expanded the further the forming element (10) engages with the inner pipe (33).

3. Calibrating and chamfering tool according to one of claims 1 or 2, **characterized in that** the calibration and chamfering tool (1) is free of a contact surface with the inner pipe (33) outside the at least one forming element (10) configured to deform the inner pipe (33).

4. Calibrating and chamfering tool according to one of claims 1 to 3, **characterized in that** the cutting tools (7) of the cutting tool carrier (2) are formed on cutting tool bodies (21).

5. Calibrating and chamfering tool according to claim 4, **characterized in that** in the assembled state of the tool the cutting tool carrier (2) rests inside the calibration sleeve (3), wherein the cutting tool bodies (21) engage in longitudinal grooves (20) which are inserted in the wall (19) of the calibration sleeve (3).

6. Calibrating and chamfering tool according to claim 5, **characterized in that** the longitudinal grooves (20) extend completely through the wall (19) of the calibrating sleeve (3).

7. Calibrating and chamfering tool according to one of claims 5 or 6, **characterized in that** the cutting tool bodies (21) each abut against a groove outer side (22) of the longitudinal grooves (20) and are spaced apart from the other groove outer side (22') to such an extent that a chip removal channel (23) is formed.

8. Calibrating and chamfering tool according to one of claims 3 to 7, **characterized in that** the base plate (6) and/or the mandrel (8) without a contact surface has an internal bore (13) with an internal thread (14) for receiving an actuating device (4), which is in particular formed as a knob (5).

9. Calibrating and chamfering tool according to claim 8, **characterized in that** the calibrating sleeve (3) has a threadless bore (34) for receiving the actuating device (4).

**Revendications**

1. Outil de calibrage et de chanfreinage pour la préparation sur mesure d'extrémités de tubes (26), les tubes comportant un tube extérieur en matière plastique (32) et un tube intérieur en métal (33), comprenant une douille de calibrage (3) conçue pour recevoir et centrer l'extrémité de tube (26), et un porte-lame (2) qui comporte une plaque de base (6), un mandrin (8) ainsi que des lames (7) pour chanfreiner le tube extérieur (32), **caractérisé par** au moins un élément de formage (10) pour élargir le tube intérieur (33), l'au moins un élément de formage (10) étant une saillie (101) qui est formée sur la plaque de base (6) et/ou sur le mandrin (8) du porte-lame (2) et qui dépasse de la plaque de base (6) d'une dimension B qui est inférieure ou égale à une dimension A avec laquelle les lames (7) dépassent de la plaque de base (6) dans la direction axiale longitudinale.

2. Outil de calibrage et de chanfreinage selon la revendication 1, **caractérisé en ce que** l'au moins un élément de forme (10) destiné à élargir le tube intérieur (33) présente une surface fonctionnelle qui est conçue pour être en contact avec le tube intérieur (33) lors du calibrage et du chanfreinage d'une extrémité de tube (26), et est orientée angulairement par rapport à l'axe longitudinal L de l'outil de calibrage et de chanfreinage (1), de sorte que le tube intérieur (33) est élargi de manière croissante à mesure que l'élément de formage (10) est en prise avec le tube intérieur (33).

3. Outil de calibrage et de chanfreinage selon l'une des revendications 1 ou 2, **caractérisé en ce que** l'outil de calibrage et de chanfreinage (1) est exempt de surface d'appui sur le tube intérieur (33) à l'extérieur du au moins un élément de formage (10) conçu pour déformer le tube intérieur (33).

4. Outil de calibrage et de chanfreinage selon l'une des revendications 1 à 3, **caractérisé en ce que** les lames (7) du porte-lame (2) sont formées sur des corps de lame (21).

5. Outil de calibrage et de chanfreinage selon la revendication 4, **caractérisé en ce que** le porte-lame (2) repose à l'état assemblé de l'outil à l'intérieur de la douille de calibrage (3), les corps de lame (21) s'engageant dans des rainures longitudinales (20) pratiquées dans la paroi (19) de la douille de calibrage (3).

6. Outil de calibrage et de chanfreinage selon la revendication 5, **caractérisé en ce que** les rainures longitudinales (20) traversent complètement la paroi (19) de la douille de calibrage (3).

7. Outil de calibrage et de chanfreinage selon l'une des revendications 5 ou 6, **caractérisé en ce que** les corps de lame (21) sont chacun en contact avec un côté extérieur (22) des rainures longitudinales (20) et sont espacés de l'autre côté extérieur (22') des rainures de manière à former une évacuation des copeaux (23).

8. Outil de calibrage et de chanfreinage selon l'une des revendications 3 à 7, **caractérisé en ce que** la plaque de base (6) et/ou le mandrin sans surface d'appui (8) présente un alésage intérieur (13) avec un filetage intérieur (14) pour recevoir un dispositif d'actionnement (4) qui est notamment conçu comme un bouton (5).

9. Outil de calibrage et de chanfreinage selon la revendication 8, **caractérisé en ce que** la douille de calibrage (3) présente un alésage sans filetage (34) destiné à recevoir le dispositif d'actionnement (4).

**Fig. 1**

**Fig. 2** (A-A)

Fig. 3

Fig. 4

## Fig. 5

a)

b)

c)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 29709178 U1
- DE 202008014245 U1